# EUROPÄISCHE PATENTSCHRIFT

(11) **EP 1 003 662 B1**
(45) Veröffentlichungstag und Bekanntmachung des Hinweises auf die Patenterteilung: **13.04.2005**
(21) Anmeldenummer: 99926459.1
(22) Anmeldetag: 28.05.1999
(51) Int. Cl.: B61F 5/38, B61F 3/16, B61C 15/14

(54) **VERFAHREN ZUR ANTRIEBSKOORDINIERUNG VON EINZELRADGETRIEBENEN, SPURGEFÜHRTEN FAHRZEUGEN**
METHOD FOR COORDINATING THE DRIVE OF TRACK-GUIDED VEHICLES WITH INDEPENDENTLY DRIVEN WHEELS
PROCEDE POUR COORDONNER L'ENTRAINEMENT DE VEHICULES GUIDES, A ROUES INDIVIDUELLES

(30) Priorität: 13.06.1998 DE 19826452
(43) Veröffentlichungstag der Anmeldung: 31.05.2000
(73) Patentinhaber: Bombardier Transportation GmbH, 13627 Berlin (DE)
(72) Erfinder: HENTSCHEL, Frank, D-12161 Berlin (DE); KOCH, Markus, D-13349 Berlin (DE); OTT, Norbert, D-63456 Hanau (DE); KROUZILEK, Rolf, D-14197 Berlin (DE)
(74) Vertreter: Thielmann, Andreas
(86) Internationale Anmeldenummer: PCT/EP1999/003699
(87) Internationale Veröffentlichungsnummer: WO 1999/065752

(56) Entgegenhaltungen:
- EP-A- 0 557 892
- EP-A- 0 590 234
- DE-A- 3 635 804
- DE-A- 4 037 626
- DE-C- 4 114 860

## Beschreibung

Die Erfindung betrifft Verfahren und Vorrichtungen zur Antriebskoordinierung von einzelradgetriebenen, spurgeführten Fahrzeugen.

Seit Anfang der 90er Jahre bieten viele Hersteller von Straßenbahnen Fahrzeuge mit einem durchgehend niedrigen Fahrzeugboden an (100% Niederflurigkeit). Die Schwierigkeit bei der Entwicklung dieser Niederflurschienenfahrzeuge bestand darin, daß sich die bis dahin übliche Radsatzwelle durch den Fahrgastraum erstreckt und dadurch mit dem Niederflurprinzip nicht vereinbar war. Ein Weg den die meisten Hersteller eingeschlagen haben, bestand im Austausch der Radsatzwelle durch eine Einzelradaufhängung mit einem Einzelradantrieb.

Radsatzwellen, deren Laufräder ein kegelförmiges Radprofil aufweisen, haben die natürliche Eigenschaft bei einem seitlichen Versatz des Radsatzes aus der Gleismitte selbsttätig zu wenden, d.h. eine Schwenk- bzw. Wendebewegung um die Hochachse auszuführen. Damit sind sie in der Lage, sowohl dauernden einseitigen Spurkaranzanlauf eines Rades im geraden Gleis ohne äußere Unterstützung zu verhindern, als auch die für Bogenfahrten notwendigen Wendebewegungen zwecks radialer Einstellung der Radsatzachse auf den Mittelpunkt des Gleisbogens ohne äußere Lenkhilfe von selbst auszuführen. Dieser natürliche Vorteil des Spurführungsprinzips des Radsatzes ist gleichzeitig sein größter Nachteil.

Die Fähigkeit des Radsatzes selbsttätig zu wenden, führt dazu, daß ein Radsatz, der im geraden Gleis einmal zu einer Wendebewegung veranlaßt wurde, im dauernden Wechsel unkontrollierte Wendebewegungen ausführt. Er bewegt sich dabei auf einer Wellenbahn (Sinuslauf) durch den Spurkanal des Gleises. Unerwünschter Schräglauf und ein ständiger Wechsel von Antriebs- und Bremskräften in den Radaufstandspunkten der Laufräder sind die Ursache für einen unruhigen Fahrzeuglauf. Verschleiß an Laufrädern und Schienen sowie Rollgeräusche sind logische Folgen. Die Radsatzbewegungen können dabei so groß werden, daß sie zum Entgleisen führen.

Unverbundene Radpaare sind andererseits nicht selbstwendefähig, wodurch sie für Kurvenfahrten ungeeignet sind.

Aus der DE 195 40 089 A1 ist ein Verfahren zur sicheren und verschleißarmen Führung von Fahrzeugen entlang eines vorgegebenen Kurses bekannt, bei dem die zur Einhaltung des Kurses erforderlichen Lenkbewegungen durch Antriebs- und Bremsdrehmomente gleicher Größe aber entgegengesetzter Richtung erfolgen, die die zum Lenken notwendigen Lenkmomente ergeben. Bei diesem Verfahren geht es um die Ansteuerung der Antriebsräder in Kurvenfahrten.

Aus der DE 195 38 379 C1 ist ein zweirädriges Fahrwerk mit Einzelradantrieb für spurgeführte Fahrzeuge mit gesteuerter Lenkung bekannt, bei dem das Fahrwerk pro Radträger zwei jeweils außerhalb der Radaufstandspunkte befindliche vertikale Schwenkachsen aufweist, wobei abwechselnd - unter Arretierung der Position der aktuell bogenäußeren Schwenkachse - der Radträger um genau diese Achse geschwenkt wird.

Aus der DE 41 35 691 A1 ist ein Verfahren zur Regelung von Fahrzeugen mit Einzelrad-Antriebs- und Bremsmoduln bekannt, die neben optimaler Ausnutzung des Kraftschlusses und der Vermeidung von Slip/Stick-Effekten führungsunterstützend wirken können. Hierbei weist jedes Antriebsmodul einen eigenen Drehmomentregelkreis auf, mit einem Schätzglied zur Ermittlung des jeweiligen Drehmoment-Ist-Wertes, wobei die Drehmomentregelkreise über mehrere Minimalwertstufen miteinander gekoppelt sind, um die Seitenkräfte zu eliminieren.

Aus der EP 0 511 949 B1 ist ein Verfahren zu Steuerung eines Fahrwerks ohne starre Achsverbindungen bekannt, bei welchem zumindest zwei einander gegenüberliegende Laufräder einzeln von separat ansteuerbaren Anriebseinheiten angetrieben werden und bei dem während der Kurvenfahrt die Antriebseinheiten einander gegenüberliegender Laufräder mit unterschiedlicher Leistung betrieben werden, wobei oberhalb einer Mindestgeschwindigkeit von 10 km /h, insbesondere bei Geradeausfahrten, die Leistung der Antriebseinheiten einander gegenüberliegender Laufräder periodisch innerhalb vorbestimmter Bandbreiten erhöht und erniedrigt wird, wobei die Leistungsänderung einander gegenüberliegender Laufräder gegenphasig erfolgt.

Aus der EP 0 590 183 81 ist ein Verfahren zur Verbesserung der Laufeigenschaften eines mit mehreren Einzelrädern versehenen Fahrwerks eines Schienenfahrzeuges bekannt, deren Fahrmotoren mittels zweier Steuer- und Regeleinrichtungen radblockweise gespeist werden. Dabei werden aus den ermittelten Raddrehzahlen zwei Radblock-drehzahlen bestimmt, aus denen ein Drehzahldifferenz-Ist-Wert gebildet und mit einem vorbestimmten. Drehzahldifferenz Soll-Wert verglichen wird. In Abhängigkeit von dieser Regeldifferenz wird dann ein Stellwert erzeugt, der durch Addition bzw. Subtraktion eines Fahrhebel-Soll-Wertes einen Drehmoment Soll-Wert für den jeweiligen Radblock bildet. Der Drehzahldifferenz-Soll-Wert wird in Abhängigkeit eines ermittelten. Bogenradius und einer Fahrwerks-Dretizahl ausschließlich. für einen Radblock bestimmt.

Aufgabe der vorliegenden Erfindung ist es, ein Fahrzeug und ein Verfahren zur Antriebskoordinierung von einzelradgetriebenen, spurgeführten Fahrzeugen auf geraden und kurvigen Strecken zu schaffen, bei dem mit minimalem Verschleiß, hoher-Sicherheit und geringem konstruktiven Aufwand höhere Geschwindigkeiten im geraden Gleis erzielt werden können.

Geiöst wird die Aufgabe, indem bei gerader Strecke eine Differenzdrehzaht von gegenüberliegenden laufräder ermittelt wird, ein Stell-Wert durch einen Regler in Abhängigkeit eines Soll-Wertes ermittelt wird und die Frequenz und/oder die Dämpfung eines Sinuslaufs des angetriebenen Laufräder über den Stell-Wert durch Reglerparameter dynamisch, d.h um Betrieb, einstellbar sind. Der Soll-Wert ist dabei idealer Weise Null. Die Drehmoment-Soll-Werte für die drehmomentgeregelten Einzelradantriebe berechnen sich aus dem angeforderten Beschleunigungsmoment und dem Stell-Wert.

Bei Kurvenfahrten wird die Winkelstellung der gegenüber der Bodengruppe drehbar befestigten Achse so eingeregelt, daß die Laufräder tangential zur Schiene stehen, indem die Winkelstellung der Achse über die Drehmoment-Soll-Werte der Einzelradantriebe eingestellt wird. Die Drehmoment-Soll-Werte für die drehmomentgeregelten Einzelradantriebe berechnen sich aus dem angeforderten Beschleunigungsmoment und dem vom Regler ermittelten Stell-Wert. Der Regler bestimmt dabei aus der Krümmung der Schiene den Soll-Wert und aus der Winkelstellung der Achse - die dem Ist-Wert entspricht - den Stellwert.

Die Krümmung wird hierbei laufend erfaßt, um bei Unterschreiten eines Schwellenwerts die Achse zu arretieren, dämit ein ruhiger Lauf auf der geraden Strecke gesichert ist.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- Figur 1: eine schematische Darstellung des Reglers für gerade Stecken für ein Fahrzeug, dessen Laufräder mit drehmomentgeregelten Einzelantrieben verbunden sind, die durch einen Regler in Abhängigkeit von Drehzahlsensoren und dem vom Fahrerpult vorgegebenen Drehmoment angetrieben werden;
- Figur 2: eine schematische Darstellung des Reglers für kurvige Stecken für ein Fahrzeug, dessen Laufräder mit drehmomentgeregelten Einzelantrieben verbunden sind, die durch einen Regler in Abhängigkeit von der Krümmung und der Winkelstellung der Achse angesteuert werden;
- Figur 3: die Kombination der Steuerung aus Figur 1 und Figur 2, wobei ein Arretierungsmittel bei Unterschreiten einer vorgegebenen Krümmung die schwenkbare Achse feststellt;

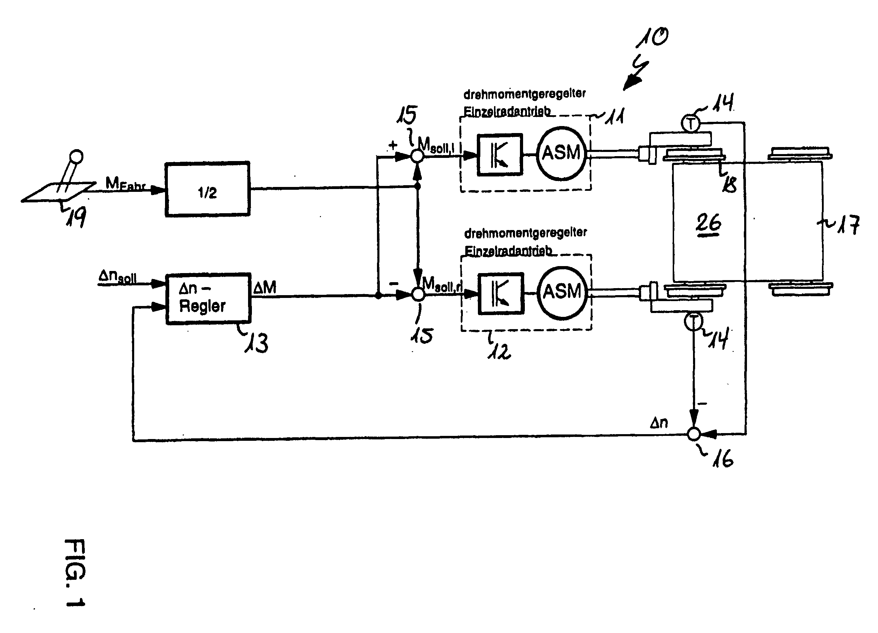

Figur 1 zeigt eine Antriebskoordinierungsregelung 10 für gerade Strecken, die drehmomentgeregelte Einzelradantriebe 11 und 12 eines Schienenfahrzeuges 26 ausregelt. Die Einzelradantriebe 11 und 12 sind mit einander gegenüberliegenden Laufrädern 18 verbunden. Aus den durch Drehzahlsensoren 14 ermittelten Drehzahlen der Laufräder 18 wird durch ein Subtraktionswerk 16 eine Differenzdrehzahl Δn berechnet. Ein Regler 13 ermittelt aus der Differenzdrehzahl Δn, die dem Isf-Wert entspricht, in Abhängigkeit von einem Soll-Wert einen Stell-Wert ΔM. Der Soll-Wert, beträgt idealer Weise Null, kann jedoch aufgrund von Fertigungstoleranzen der Einzelradantriebe 11 und 12 sowie der Laufräder 18 individuell angepaßt werden. In einer weiteren Ausführung läßt sich die Differenzdrehzahl Δn aus der Motordrehzahl berechnen.

Der Regler 13 ist so ausgelegt, daß die Frequenz und die Dämpfung des Stell-Werts ΔM durch Reglerparameter dynamisch einstellbar sind. So können die Reglerparameter in Abhängigkeit von der Geschwindigkeit angepaßt werden. Dabei weist der Regler 13 vorzugsweise einen Proportional und Integralanteil auf, um das dynamische, sinusförmige Verhalten eines, Fahrwerks mit Radsatzwelle nächzubilden. Des Weiteren umfaßt der Regler 13 einen differenzierenden Anteil, über dessen Parametrisierung die Dämpfung des Zentrierungsverhaltens einstellbar ist.

Die Drehmoment-Soll-Werte M_{soll,l} M_{soll,r} für die drehmomentgeregelten Einzelradantriebe 11 und 12 berechnen sich aus dem vom Fahrer geforderten Beschleunigungsmoment M_{fahr} und dem Stell-Wert ΔM. Hierbei wird der Stell-Wert ΔM mit jeweils unterschiedlichen Vorzeichen durch ein Addierwerk 15 auf die Hälfte des geforderten- Beschleunigungsmoment M_{fahr} addiert. Das Beschleunigungsmoment M_{fahr} kann in in einem Fahrerpult 19 eingestellt werden.

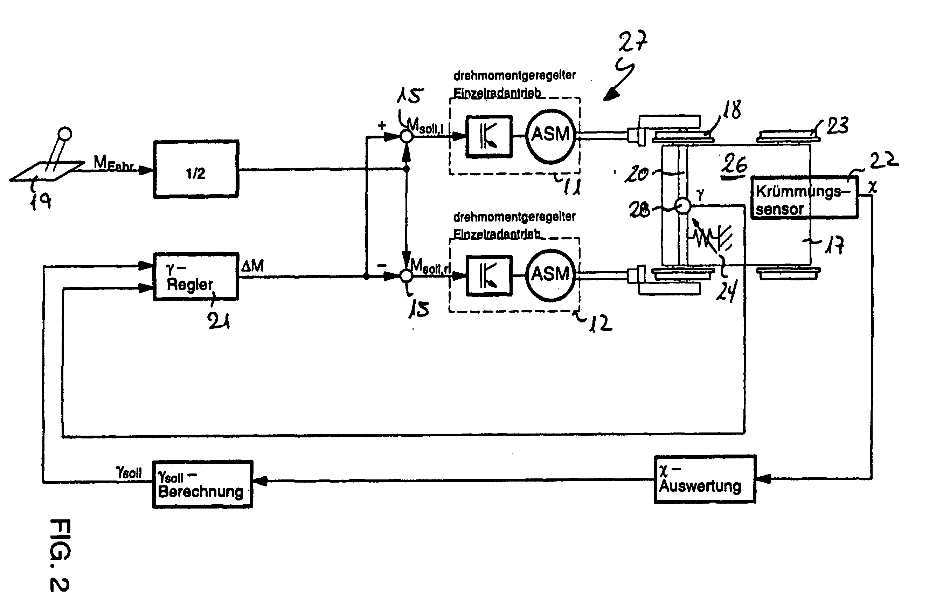

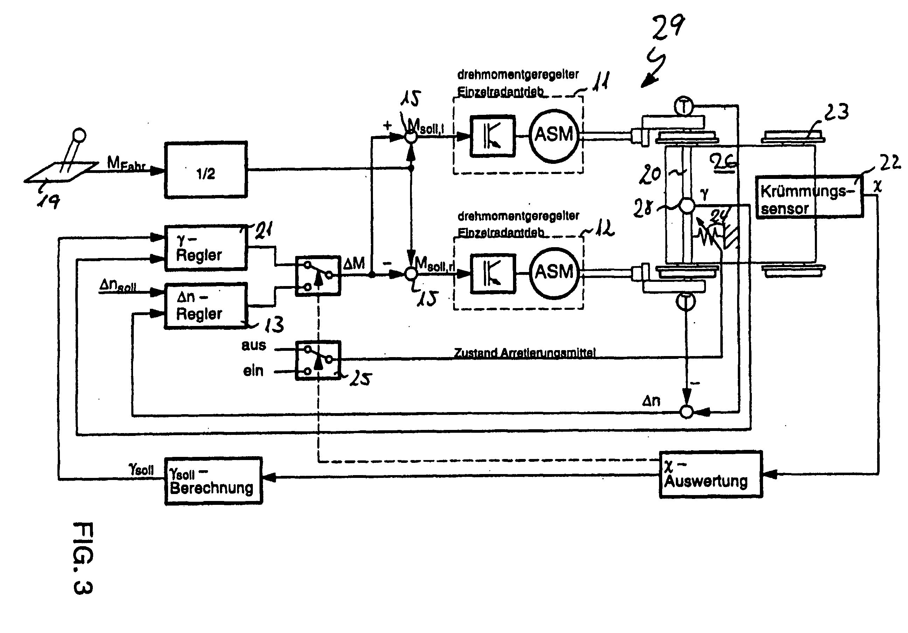

Fig. 2 und 3 zeigt eine Bodengruppe 17 des Fahrzeuges 26 mit Laufrädern 18 die an einer drehbar gelagerten Achse 20 befestigt sind, die vorzugsweise die Hinterachse darstellt. Die Achse 20 ist vorzugsweise auf einem zentralen Gelenk 28 angeordnet und wird durch Rückholmittel 24 in einer vorgegebenen Position gehalten. Die vorderen Laufräder 23 sind selbstlenkend und voneinander unabhängig mit der Bodengruppe 17 verbunden.

Fig. 2 zeigt eine Antriebskoordinierungsregelung für kurvige Strecken 27, die vorzugsweise auf der dargestellten Bodengruppe 17 basiert. Hierbei wird die Winkelstellung γ der Achse 20 gegenüber der Bodengruppe 17 so eingeregelt, daß die Laufräder tangential zur Schiene stehen. Die Winkelstellung γ der Achse 20 wird über die Drehmoment-Soll-Werte M_{soll,l} M_{soll,r} der Einzelradantriebe 11 und 12 eingestellt.

Die Drehmoment-Soll-Werte M_{soll,l,}, M_{soll,r} für die drehmomentgeregelten Einzelradantriebe 11 und 12 werden aus dem vom Fahrer geforderten halben Beschleunigungsmoment M_{fahr} und dem vom Regler 21 ermittelten Stell-Wert ΔM berechnet. Der Stell-Wert ΔM wird durch den Regler 21 in Abhängigkeit von einem aus der Krümmung χ der Schiene ermittelten Soll-Wert und der Winkelstellung γ der Achse als Ist Wert bestimmt.

Dabei wird der Stett-Wert ΔM· je nach Kurvenrichtung mit einem positiven oder einem negativen Vorzeichen auf das vom Fahrer geforderte Beschleunigungsmoment M_{fahr} für den jeweiligen Einzelradantrieb 11 bzw. 12 addiert, so daß die Summe der beiden Stell-Werte ΔM· gleich Null ist.

Die Berechnung der Krümmung χ erfolgt durch Division der Winkelgeschwindigkeit Ω durch die Transtätionsgeschwindigkeit *v*. Der Sinus des Soli-Werts γₛₒₗₗ des Reglers 21, berechnet sich durch Multiplikation der Krümmung χ mit dem halben Abstand zwischen Kurvensensor 22 und zu lenkender Achse 20. Die hier beschriebene Approximation verhindert, daß die hintere. Achse 20 gelenkt wird, obwohl sich erst die vordere Achse in der Kurve befindet. So ergeben sich während des Kurveneihlaufs zwei Näherungen. Die erste besagt, daß für eine exakte Sollwertberechnung beim Kurveneinlauf sowohl der Krümmungsverlauf an der Vorderachse als auch an der Hinterachse bekannt sein müßte, jedoch wird aufgrund der Fahrwerksdrehung nur ein Wert dazwischen gemessen. Bei der zweiten erfolgt eine Näherung bei der Lenkwinkelberechnung während des Kurveneinlaufs. Die beiden Näherungen heben sich im wesentlichen auf, so daß der berechnete Soll-Wert γₛₒₗₗ sehr gut mit dem idealen Lenkwinkelverlauf übereinstimmt.

Die Translationsgeschwindigkeit *v* wird durch bekannte Mittel bestimmt. Die Winkelgeschwindigkeit Ω wird vorzugsweise durch einen Drehraten- bzw. Kreiselsensor ermittelt.

Die Krümmung χ der Schiene wird durch einen Kurvensensor 22 an der Radstellung von nicht angetriebenen Vorderrädern 23 bestimmt, die vorzugsweise einzeln drehbar und selbstlenkend gelagert, sind.

Die Annahme, daß die Achse im Spurkanal exakt geführt wird, ist nachweislich nicht richtig. Vielmehr kann die Achse im Rahmen des Spurspiels Pendelbewegungen ausführen, die von Gleislagefehlern angeregt werden. Diese Störungen werden mit dem Kurvensensor 22 erfaßt und führen zu fehlerhaften Berechnungen. Zur Eliminierung des Einflusses der Pendelbewegung der Achse wird der Meßwert der Winkelgeschwindigkeit Ω mittels eines - nicht dargestellten - Tiefpaßfilters geglättet.

Fig. 3 zeigt eine Kombination 28 der Antriebskoordinierungsregelung auf gerader Strecke 10 und der Antriebskoordinierungsregelung auf kurviger Strecke 27. Dabei wird die Krümmung χ der Strecke laufend erfaßt, um bei einem Unterschreiten eines vorgegebenen Schwellenwerts die Achse 20 durch ein Arretierungsmittel 25 festzustellen. Nach der Arretierung wird das in Figur 1 beschriebenen Verfahren für gerade Strecken aktiviert. Bei Überschreiten des vorgegeben Schwellenwertes, wird das Arretierungsmittel 25 gelöst und das Verfahren nach Figur 2 aktiviert.

Für den Fall, daß die Winkelregulierung fehlerhaft ist, wird die Achse 20 durch ein Rückholmittel 24 zurückgestellt, um in der neutralen Position arretiert zu werden.

Die Erfindung umfaßt weiterhin spurgeführte Fahrzeuge, die entweder die beschriebene Antriebskoordinierungsregelung für gerade Strecken, für kurvige Strecken oder gerade und kurvige Strecken aufweisen.

### Bezugszeichen

- 10: Antriebskoordinierungsregelung für gerade Strecken
- 11: drehmomentgeregelter Einzelradantrieb
- 12: drehmomentgeregelter Einzetradantrieb
- 13: Regler
- 14: Drehzahlsensor
- 15: Addierwerk
- 16: Subtraktionswerk
- 17: Bodengruppe
- 18: Laufrad
- 19: Fahrerpult
- 20: Achse
- 21: Regler für Kurven
- 22: Kurvensensor
- 23: Laufrad, vorne
- 24: Rückholmittel
- 25: Arretierungsmittel
- 26: Fahrzeug
- 27: Antriebskoordinierungsregelung für kurvige Strecke
- 28: Gelenk
- 29: Antriebskoordinierungsregelung für kurvige und gerade Strecke

## Patentansprüche

1. Verfahren zur Antriebskoordinierung eines einzelradgetriebenen, spurgeführten Fahrzeuges, bei dem
- eine Differenzdrehzahl (Δn) von gegenüberliegenden, jeweils durch einen Einzelradantrieb (11, 12) angetriebenen Laufrädern (18) ermittelt wird,
- ein Drehmoment-Steil-Wert (ΔM) durch einen Regler (13) in Abhängigkeit von der Differenzdrehzahl (Δn) und einem Differenzdrehzahl-Soll-Wert ermittelt wird,
**dadurch gekennzeichnet, dass**
- auf gerader Strecke die Frequenz und/oder die Dämpfung eines Sinuslaufs der angetriebenen Laufräder (18) über den Drehmoment-Steil-Wert (ΔM) durch veränderbare Reglerparameter des Reglers (13) im Betrieb einstellbar ist.

2. Verfahren nach Anspruch 1, **dadurch gekennzeichnet, dass** der Differenzdrehzahl-Soll-Wert an die Fertigungstoleranzen der Einzelradantriebe (11, 12) und/oder der Laufräder (18) angepasst ist, insbesondere gleich Null ist.

3. Verfahren nach Anspruch 1 oder 2, **dadurch gekennzeichnet, dass** sich die Drehmoment-Soll-werte (M_{soll,I}, M_{soll,r}) für die drehmomentgeregelten Einzelradantriebe aus dem angeforderten Beschleunigungsmoment (M_{Fahr}) und dem Drehmoment-Steil-Wert (ΔM) berechnen.

4. Verfahren nach Anspruch 3, **dadurch gekennzeichnet, dass** sich die Drehmoment-Soll-Werte (M_{soll,I}, und M_{soll.r}) durch Addition des halben Beschleunigungsmoments (1/2 M_{Fahr}) mit dem Drehmoment-Stell-Wert (ΔM) berechnen.

5. Verfahren nach Anspruch 4, **dadurch gekennzeichnet, dass** der Drehmoment-Stell-Wert (ΔM) je nach Antriebsseite ein unterschiedliches Vorzeichen aufweist.

6. Verfahren nach einem der Ansprüche 1 bis 5, **dadurch gekennzeichnet, dass** der Regler (13) einen Proportionalanteil und einen Integralanteil aufweist, um das dynamische, sinusförmige Verhalten eines Fahrwerks mit Radsatzwelle nachzubilden.

7. Verfahren nach einem der Ansprüche 1 bis 6, **dadurch gekennzeichnet, dass** der Regler (13) einen differenzierenden Anteil aufweist, über dessen Parametrisierung die Dämpfung des Zentrierungsverhaltens einstellbar ist.

8. Verfahren nach einem der Ansprüche 1 bis 7, **dadurch gekennzeichnet, dass** die Reglerparameter des Reglers (13) in Abhängigkeit von der Geschwindigkeit angepasst werden.

9. Verfahren nach einem der Ansprüche 1 bis 8, **dadurch gekennzeichnet, dass** die Differenzdrehzahl (Δn) aus der Motordrehzahl berechnet wird.

10. Verfahren nach einem der Ansprüche 1 bis 9, **dadurch gekennzeichnet, dass** zur Antriebskoordinierung des Fahrzeuges, bei dem mindestens eine Achse drehbar gegenüber der Bodengruppe (17) befestigt ist, bei Kurvenfahrten die Winkelstellung (γ) der Achse (20) gegenüber der Bodengruppe (17) so eingeregelt wird, dass die Laufräder (18) tangential zur Schiene stehen, wobei die Winkelstellung (γ) der Achse (20) über die Drehmoment-Soll-Werte (M_{soll, I} M_{soll,r}) der Einzelradantriebe (11, 12) eingestellt wird.

11. Verfahren nach Anspruch 10, **dadurch gekennzeichnet, dass** sich die Drehmoment-Soll-Werte (M_{soll,l}, M_{soll,r}) für die drehmomentgeregelten Einzelradantriebe (11, 12) bei Kurvenfahrt aus dem angeforderten Beschleunigungsmoment (M_{Fahr}) und einem von einem zweiten Regler (21) ermittelten Drehmoment-Steil-Wert (ΔM) berechnen, wobei der zweite Regler den Drehmoment-Stell-Wert (ΔM) aus einem aus der Krümmung (χ) der Schienen berechneten Winkel-Soll-Wert (γₛₒₗₗ) und der Winkelstellung (γ) der Achse (20) als Ist-Wert bestimmt.

12. Verfahren nach Anspruch 11, **dadurch gekennzeichnet, dass** der Drehmoment-Stell-Wert (ΔM) für den jeweiligen Einzelradantrieb (11, 12) je nach Kurvenrichtung mit einem positiven oder einem negativen Vorzeichen auf das angeforderte Beschleunigungsmoment (M_{Fahr}) addiert wird, so dass die Summe der Drehmoment-Stell-Wert (ΔM) für beide Einzelradantriebe (11, 12) gleich Null ist.

13. Verfahren nach Anspruch 11 oder 12, **dadurch gekennzeichnet, dass** die Krümmung (χ) der Schienen aus der Division der Winkelgeschwindigkeit (Ω) durch die Translationsgeschwindigkeit (*v*) berechnet wird,

14. Verfahren nach Anspruch 13, **dadurch gekennzeichnet, dass** zur Eliminierung des Einflusses der Pendelbewegung des Fahrwerks der Messwert der Winkelgeschwindigkeit (Ω) mittels eines Tiefpassfilters geglättet wird.

15. Verfahren nach Anspruch 13 oder 14, **dadurch gekennzeichnet, dass** die Winkelgeschwindigkeit (Ω) durch einen Drehraten- bzw. Kreiselsensor bestimmt wird.

16. Verfahren nach einem der Ansprüche 11 bis 15, **dadurch gekennzeichnet, dass** der Winkel-Soll-Wert (γₛₒₗₗ) aus der Multiplikation der Krümmung (χ) der Schienen mit dem halben Abstand zwischen einem Kurvensensor (22) und zu lenkender Achse (20) bestimmt wird.

17. verfahren nach einem der Ansprüche 11 bis 16, **dadurch gekennzeichnet, dass** die Krümmung (χ) der Schienen an der Radstellung von nicht angetriebenen vorderrädern (23) bestimmt wird, die einzeln drehbar gelagert sind.

18. Verfahren nach einem der Ansprüche 10 bis 17, **dadurch gekennzeichnet, dass** die Krümmung (χ) der Strecke laufend erfasst wird, bei Unterschreiten eines Schwellenwerts die Achse (20) arretiert wird und das Verfahren nach einem der Ansprüche 1 bis 9 zur Zentrierung auf gerader Strecke Anwendung findet und bei einem Überschreiten des Schwellenwertes das Verfahren nach einem der Ansprüche 10 bis 17 zur Winkelregulierung bei Kurvenfahrt Anwendung findet.

19. Verfahren nach Anspruch 18, **dadurch gekennzeichnet, dass** für den Fall einer defekten Winkelregulierung die Achse (20) durch eine Vorrichtung (24) zurückgestellt wird, um in einer neutralen Position arretiert zu werden.

20. Spurgeführtes Fahrzeug
- mit Einzelrad-Antrieben (11, 12), die drehmomentgeregelt sind und
- mit einem Regler (13), der die Einzelrad-Antriebe (11, 12) auf einer geraden Stecken durch das Verfahren nach einem der Ansprüche 1 bis 9 regelt, wobei die Differenzdrehzahl (Δn) mit Hilfe von Drehzahlsensoren (14) bestimmbar ist.

21. Spurgeführtes Fahrzeug nach Anspruch 20
- mit mindestens einer drehbar gelagerten Achse (20), an der die durch die Einzelrad-Antriebe (11, 12) angetriebenen Laufräder (18) drehbar gelagert sind,
- mit einem zweiten Regler (21 ), der die Einzelrad-Antriebe (11, 12) in einer Kurve durch das Verfahren nach einem der Ansprüche 10 bis 19 regelt, wobei die Krümmung (χ) der Schienen durch einen Kurvensensor (22) bestimmbar ist.

22. Spurgeführtes Fahrzeug nach Anspruch 21
- mit einem Arretierungsmittel (25) zum Feststellen der Achse (20), das durch ein Verfahren nach den Ansprüchen 18 oder 19 gesteuert wird.

23. Spurgeführtes Fahrzeug nach einem der Ansprüche 21 und 22, **dadurch gekennzeichnet, dass** die Einzelrad-Antriebe (11, 12) die in Fahrtrichtung hinteren Laufräder (18) antreiben, die in Fahrtrichtung vorderen Laufräder (23) einzeln lenkbar gelagert sind und der Kurvensensor (22) den Lenkwinkel der vorderen Laufräder (23) bestimmt.

24. Spurgeführtes Fahrzeug nach einem der Ansprüche 21 bis 23, **dadurch gekennzeichnet, dass** Rückholmittel (24) die Achse (20) zentrieren.

## Claims

1. Method to coordinate the drive of a track-guided vehicle with independently driven wheels, in which
- a differential speed (Δn) of opposite running wheels (18) each driven by an individual wheel drive (11, 12) is determined
- a torque control value (ΔM) is determined by a controller (13) as a function of the differential speed (Δn) and a differential speed set point value,
**characterized in that**,
- on a straight track, the frequency and/or the damping of a sinus course of the driven running wheels (18) is adjustable during operation via the torque control value (ΔM) by adjustable controller parameters of the controller (13).

2. Method according to claim 1, **characterized in that** the differential speed set point value is adapted to the manufacturing tolerances of the individual wheel drives (11, 12) and/or the running wheels (8), in particular, equals zero.

3. Method according to claim 1 or 2, **characterized in that** the torque set point values (M_{soll,I,} M_{soll, r}) for the torque-controlled individual wheel drives are calculated from the required acceleration torque (M_{Fahr}) and the torque control value (ΔM).

4. Method according to claim 3, **characterized in that** the torque set point values (M_{soll, I}, and M_{soll,r}) are calculated by addition of half of the acceleration torque (1/2 M_{Fahr}) with the torque control value (ΔM).

5. Method according to claim 4, **characterized in that** the torque control value (ΔM) has a different mathematical sign, depending on the drive side.

6. Method according to one of claims 1 to 5, **characterized in that** the controller (13) has a proportional section and an integral section to simulate the dynamic sinusoidal behaviour of a running gear with a wheel set shaft.

7. Method according to one of claims 1 to 6, **characterized in that** the controller (13) has a differentiating section, the damping of the centering action being adjustable by the parameter settings thereof.

8. Method according to one of claims 1 to 7, **characterized in that** the controller parameters of the controller (13) are adapted as a function of the speed.

9. Method according to one of claims 1 to 8, **characterized in that** the differential speed (Δn) is calculated from the engine speed.

10. Method according to one of claims 1 to 9, **characterized in that**, for the drive coordination of the vehicle, in which at least one axle is fastened such that it is rotatable with respect to the underbody (17), when travelling a curved section of track, the angular position (γ) of the axle (20) with respect to the underbody (17) is regulated such that the running wheels (18) are tangential to the rail, whereby the angular position (γ) of the axle (20) is set by means of the torque set point values (M_{soll, I}, and M_{soll,r}) of the individual wheel drives (11, 12).

11. Method according to claim 10, **characterized in that**, when travelling on a curved section of track, the torque set point values (M_{soll,l}, and M_{soll,r}) for the torque-controlled individual wheel drives (11, 12) are calculated from the required acceleration torque (M_{Fahr}) and the torque control value (ΔM) is determined by a second controller (21), wherein the second controller calculates the torque control value (ΔM) from an angular set point value (γₛₒₗₗ), calculated from the curvature (χ) of the rails, and the angular position (γ) of the axle (20) as the current value.

12. Method according to claim 11, **characterized in that** the torque control value (ΔM) for the respective individual wheel drive (11, 12), depending on the direction of the track curve, is added with a positive or a negative mathematical sign to the required acceleration torque (M_{Fahr}), so that the sum of the torque control values (ΔM) for both individual wheel drives (11, 12) equals zero.

13. Method according to claim 11 or 12, **characterized in that** the curvature (χ) of the rails is calculated by dividing the angular velocity (Ω) by the translatory velocity (*v*).

14. Method according to claim 13, **characterized in that**, to eliminate the influence of the oscillating movement of the running gear, the measured value of the angular velocity (Ω) is smoothed by means of a low-pass filter.

15. Method according to claim 13 or 14, **characterized in that** the angular velocity (Ω) is determined by a rotation rate sensor or gyro sensor.

16. Method according to one of claims 11 to 15, **characterized in that** the angular set point value (γₛₒₗₗ) is determined by multiplying the curvature (χ) of the rails by half of the distance between a curve sensor (22) and the axle (20) to be steered.

17. Method according to one of claims 11 to 16, **characterized in that** the curvature (χ) of the rails is determined from the wheel position of non-driven front wheels (23) that are mounted so that they can rotate individually.

18. Method according to one of claims 10 to 17, **characterized in that** the curvature (χ) of the track is measured continuously, and, upon dropping below a threshold, the axle (20) is arrested and the method for centering on a straight section of track according to one of claims 1 to 9 is used, and, upon exceeding the threshold, the method for the angular regulation during travelling curves according to one of claims 10 to 17 is used.

19. Method according to claim 18, **characterized in that**, in the event of a defective angular control, the axle (20) is returned by a device (24) to be arrested in a neutral position.

20. Track-guided vehicle
- with individual wheel drives (11, 12) that are torque-controlled, and
- with a controller (13) which, on a straight section of track, regulates the individual wheel drives (11, 12) by the method according to one of claims 1 to 9, wherein the differential speed (Δn) is determinable by means of speed sensors (14).

21. Track-guided vehicle according to claim 20
- with at least one rotationally mounted axle (20) on which the running wheels (18) driven by the individual wheel drives (11, 12) are rotatably mounted,
- with a second controller (21) which, in a curve, regulates the individual wheel drives (11, 12) by the method according to one of claims 10 to 19, wherein the curvature (χ) of the rails is determinable by a curve sensor (22).

22. Track-guided vehicle according to claim 21
- with arresting means (25) for fixing the axle (20) in position, which is controlled by a method according to the claims 18 or 19.

23. Track-guided vehicle according to one of claims 21 and 22, **characterized in that** the individual wheel drives (11, 12) drive running wheels (18) located in the rear with respect to the direction of travel, the running wheels (23) located in the front with respect to the direction of travel are mounted such that they are steerable individually and the curve sensor (22) determines the steering angle of the front running wheels (23).

24. Track-guided vehicle according to one of claims 21 to 23, **characterized in that** restoring means (24) center the axle (20).

## Revendications

1. Procédé pour la coordination d'entraînement d'un véhicule guidé sur tracé et entraîné par des roues indépendantes, dans lequel
- une vitesse de rotation différentielle (Δn) de roues porteuses (18) se faisant face et entraînées respectivement par une propulsion de roue individuelle (11, 12) est calculé,
- une valeur de commande de couple (ΔM) est calculée par un régulateur (13) en fonction de la vitesse de rotation différentielle (Δn) et une valeur donnée de la vitesse de rotation différentielle,
**caractérisé en ce que**,
- sur un tronçon droit, la fréquence et/ou l'amortissement d'une course sinusoïdale des roues porteuses (18) entraînées est réglable pendant le service au moyen de la valeur de commande de couple (ΔM) par des paramètres de régulateur modifiables du régulateur (13).

2. Procédé selon la revendication 1, **caractérisé en ce que** la valeur donnée de la vitesse de rotation différentielle est adaptée aux tolérances de fabrication des propulsions de roue individuelle (11, 12) et/ou des roues porteuses (18), en particulier est égale à zéro.

3. Procédé selon la revendication 1 ou 2, **caractérisé en ce que** les valeurs données de couple (M_{soll, I}, M_{soll,r}) pour les propulsions de roue individuelle réglées par couple se calculent à partir du couple d'accélération (M_{Fahr}) demandé et de la valeur de commande de couple (ΔM).

4. Procédé selon la revendication 3, **caractérisé en ce que** les valeurs données de couple (M_{soll,l}, et M_{soll,r}) se calculent par l'addition du demi-couple d'accélération (1/2 M_{Fahr}) avec la valeur de commande de couple (ΔM).

5. Procédé selon la revendication 4, **caractérisé en ce que** la valeur de commande de couple (ΔM) présente un signe différent en fonction du côté d'entraînement.

6. Procédé selon l'une quelconque des revendications 1 à 5, **caractérisé en ce que** le régulateur (13) présente une partie proportionnelle et une partie intégrale, afin de simuler le comportement dynamique et sinusoïdal d'un train de roulement avec un arbre d'essieu monté.

7. Procédé selon l'une quelconque des revendications 1 à 6, **caractérisé en ce que** le régulateur (13) présente une partie différenciatrice, l'amortissement du comportement de centrage étant réglable par le paramétrage de celle-ci.

8. Procédé selon l'une quelconque des revendications 1 à 7, **caractérisé en ce que** les paramètres du régulateur (13) sont adaptés en fonction de la vitesse.

9. Procédé selon l'une quelconque des revendications 1 à 8, **caractérisé en ce que** la vitesse de rotation différentielle (Δn) est calculé à partir de la vitesse de rotation du moteur.

10. Procédé selon l'une quelconque des revendications 1 à 9 **caractérisé en ce que**, pour la coordination d'entraînement du véhicule, sur lequel au moins un essieu est fixé de façon rotative par rapport au dessous de caisse (17), la position angulaire (γ) de l'essieu (20) par rapport au dessous de caisse (17) est réglée, pendant la marche dans des virages, de telle sorte que les roues porteuses (18) sont placées de façon tangentielle par rapport au rail, la position angulaire (γ) de l'essieu (20) étant réglée au moyen des valeurs données de couple (M_{soll,I}, M_{soll,r}) des propulsions de roue individuelle (11, 12).

11. Procédé selon la revendication 10, **caractérisé en ce que**, lors de la marche dans un virage, les valeurs données de couple (M_{soll,I}, M_{soll,r}) pour les propulsions de roue individuelle (11, 12) réglées par couple se calculent à partir du couple d'accélération (M_{Fahr}) demandé et d'une valeur de commande de couple (ΔM) calculée par un second régulateur (21), le second régulateur déterminant la valeur de commande de couple (ΔM) à partir d'une valeur donnée d'angle (γₛₒₗₗ), calculée à partir de la courbure (χ) des rails, et de la position angulaire (γ) de l'essieu (20) en tant que valeur actuelle.

12. Procédé selon la revendication 11, **caractérisé en ce que** la valeur de commande de couple (ΔM) pour la propulsion de roue individuelle (11, 12) respective est ajoutée, selon le sens du virage, avec un signe positif ou un signe négatif au couple d'accélération (M_{Fahr}) demandé, de sorte que la somme des valeurs de commandé de couple (ΔM) pour les deux propulsions de roue individuelle (11, 12) est égale à zéro.

13. Procédé selon la revendication 11 ou 12, **caractérisé en ce que** la courbure (χ) des rails est calculée à partir de la division de la vitesse angulaire (Ω) par la vitesse de translation (v).

14. Procédé selon la revendication 13, **caractérisé en ce que** la valeur de mesure de la vitesse angulaire (Ω) est lissée au moyen d'un filtre passe-bas pour éliminer l'influence du mouvement oscillatoire du train de roulement.

15. Procédé selon la revendication 13 ou 14, **caractérisé en ce que** la vitesse angulaire (Ω) est déterminée par un capteur de taux de rotation ou capteur gyroscopique.

16. Procédé selon l'une quelconque des revendications 11 à 15, **caractérisé en ce que** la valeur donnée d'angle (γₛₒₗₗ) est déterminée à partir de la multiplication de la courbure (χ) des rails avec la demi-distance entre un capteur de virage (22) et l'essieu (20) à diriger.

17. Procédé selon l'une quelconque des revendications 11 à 16, **caractérisé en ce que** la courbure (χ) des rails est déterminée par la position de roue de roues avant (23) non entraînées, qui sont logées individuellement de façon rotative.

18. Procédé selon l'une quelconque des revendications 10 à 17, **caractérisé en ce que** la courbure (χ) du tronçon est enregistrée en permanence, en cas de sous-dépassement d'une valeur seuil l'essieu (20) étant arrêté et le procédé pour le centrage sur un tronçon droit selon l'une quelconque des revendications 1 à 9 étant appliqué, et, lors d'un dépassement de la valeur seuil, le procédé pour le réglage d'angle en cas de virages selon l'une quelconque des revendications 10 à 17 étant appliqué.

19. Procédé selon la revendication 18, **caractérisé en ce que**, dans le cas d'un réglage d'angle défectueux, l'essieu (20) est reculé par un dispositif (24) afin d'être bloqué dans une position neutre.

20. Véhicule guidé sur tracé
- comprenant des propulsions de roue individuelle (11, 12), qui sont régulées par le couple, et
- avec un régulateur (13), qui règle, sur un tronçon droit, les propulsions de roue individuelle (11, 12) par le procédé selon l'une quelconque des revendications 1 à 9, la vitesse de rotation différentielle (Δn) étant déterminable à l'aide de capteurs de vitesse de rotation (14).

21. Véhicule guidé sur tracé selon la revendication 20
- comprenant au moins un essieu (20) logé de façon rotative, sur lequel les roues porteuses (18) entraînées par les propulsions de roue individuelle (11, 12) sont logées de façon rotative,
- avec un second régulateur (21), qui règle, dans un virage, les propulsions de roue individuelle (11, 12) par le procédé selon l'une quelconque des revendications 10 à 19, la courbure (χ) des rails étant déterminable par un capteur de virage (22).

22. Véhicule guidé sur tracé selon la revendication 21,
- avec un moyen de blocage (25) pour l'arrêt de l'essieu (20), qui est commandé par un procédé selon les revendications 18 ou 19.

23. Véhicule guidé sur tracé selon l'une quelconque des revendications 21 et 22, **caractérisé en ce que** les propulsions de roue individuelle (11, 12) entraînent les roues porteuses (18) situées en arrière dans le sens de marche, les roues porteuses (23) situées en avant dans le sens de marche sont logées de façon à être braquable individuellement et le capteur de virage (22) détermine l'angle de braquage des roues porteuses (23) avant.

24. Véhicule guidé sur tracé selon l'une quelconque des revendications 21 à 23, **caractérisé en ce que** des moyens de rappel (24) centrent l'essieu (20).
